# DEMANDE DE BREVET EUROPEEN

(11) **EP 1 211 614 A1**
(43) Date de publication de la demande: **05.06.2002**
(21) Numéro de dépôt: 01204427.7
(22) Date de dépôt: 20.11.2001
(51) Int. Cl.: G06F 17/30

(54) **Procédé de recherche dans une structure hiérarchique d'objets**

(30) Priorité: 28.11.2000 FR 0015352
(71) Demandeur: Koninklijke Philips Electronics N.V., 5621 BA Eindhoven (NL)
(72) Inventeur: Mory, Benoît, 75008 Paris (FR); Santini, Nicolas, 75008 Paris (FR)
(74) Mandataire: de la Fouchardière, Marie-Noelle

(57) **Abrégé**

L'invention concerne un procédé de recherche d'un nombre prédéterminé d'objets les plus proches d'un exemple, dans une structure hiérarchique d'objets obtenue en utilisant un procédé de classification hiérarchique d'objets.

Le procédé proposé consiste à parcourir la structure hiérarchique à partir de la racine, en descendant jusqu'au premier noeud le plus proche de l'exemple recherché dont dépendent un nombre de feuilles inférieur au nombre de résultats manquants, puis en remontant au noeud frère de ce noeud qui est le plus proche de l'exemple recherché pour rajouter d'autres résultats, et ainsi de suite jusqu'à arriver audit nombre prédéterminé.

Application : descriptions MPEG-7

## Description

### Domaine de l'invention

L'invention concerne un procédé de recherche dans un ensemble d'objets d'un nombre prédéterminé d'objets les plus proches d'un exemple. L'invention concerne également un programme d'ordinateur et un équipement comportant des moyens de mise en oeuvre d'un tel procédé de recherche. Elle concerne enfin un système de transmission comportant un tel équipement.

L'invention a d'importantes applications dans le domaine de l'exploitation des données de type audio/vidéo.

Les capacités de transmission et de stockage d'informations augmentent de façon considérable, si bien que dans de nombreux domaines, y compris dans le domaine de l'électronique grand public, l'utilisateur a désormais des difficultés pour gérer l'information dont il dispose. Dans ce contexte, les méthodes de recherche d'objets prennent une importance croissante.

### Arrière plan technologique de l'invention

Le brevet américain 5,832,182 décrit des procédés de partition de données et évoque l'intérêt de tels procédés pour faire de la recherche. La partition des données permet en effet de réduire le nombre de comparaison à effectuer pour faire une recherche, et donc le temps de traitement nécessaire à la recherche.

### Résumé de l'invention

L'invention a notamment pour but de proposer un procédé efficace de recherche d'objets en utilisant une partition d'objets à plusieurs niveaux.

Un procédé de recherche selon l'invention est remarquable en ce que, pour rechercher dans un ensemble d'objets un nombre prédéterminé d'objets les plus proches d'un exemple, en utilisant une partition à plusieurs niveaux qui a une structure arborescente comportant des noeuds et des feuilles, les noeuds contenant des éléments représentatifs de classes d'objets, et les feuilles contenant des objets, il comporte les étapes suivantes:
- une étape de parcours de ladite structure arborescente à partir d'un noeud, vers des feuilles, en passant par les noeuds dont les éléments représentatifs sont les plus proches de l'exemple, pour sélectionner une ou plusieurs feuilles,
- une étape de test pour vérifier si le nombre de feuilles sélectionnées est inférieur audit nombre prédéterminé d'objets,
- et, si le nombre de feuilles sélectionnées est inférieur audit nombre prédéterminé d'objets, une nouvelle itération desdites étapes, à partir du noeud frère du dernier noeud parcouru, le plus proche dudit exemple.

L'utilisation d'une partition à plusieurs niveaux est particulièrement avantageuse pour faire de la recherche, parce qu'elle permet de réduire encore le nombre de comparaisons nécessaires à la recherche, et donc le temps de traitement. Elle permet aussi de traiter des ensembles comportant un nombre d'objets beaucoup plus important qu'avec une partition à un seul niveau. En effet, avec une partition à un seul niveau, lorsque la taille de l'ensemble d'objets augmente de façon significative, cela entraîne soit l'augmentation du nombre de classes, soit l'augmentation du nombre d'objets contenus dans une classe. Dans les deux cas, on est amené à comparer l'exemple recherché à un beaucoup plus grand nombre d'objets. Le temps de traitement augmente donc considérablement. En revanche, avec une partition multi-niveaux, l'exemple recherché n'est comparé qu'à un nombre restreint d'objets à chaque niveau de la partition. L'augmentation de la taille de l'ensemble a donc beaucoup moins d'influence sur le temps de traitement de la recherche.

L'invention propose une façon avantageuse de parcourir la structure arborescente d'une partition à plusieurs niveaux.

Dans un mode de réalisation avantageux de l'invention, le nombre prédéterminé d'objets est un multiple d'un nombre prédéterminé de résultats, et ledit procédé comporte une étape supplémentaire de sélection pour ne retenir, parmi les feuilles sélectionnées, qu'un nombre de feuilles égal audit nombre prédéterminé de résultats, les feuilles retenues étant celles qui contiennent les objets les plus proches dudit l'exemple.

La partition des objets a pour effet de réduire le nombre de comparaisons à effectuer pour faire une recherche. Mais elle entraîne nécessairement une détérioration des résultats de la recherche. Ce mode de réalisation permet de limiter cette détérioration. En effet, le fait de sélectionner dans un premier temps un nombre de feuilles supérieur au nombre de résultats souhaité, puis d'effectuer une sélection complémentaire, par exemple par comparaison exhaustive des objets contenus dans les feuilles sélectionnées avec l'exemple recherché, permet d'améliorer de façon notable la qualité des résultats obtenus.

D'une façon générale l'invention est applicable à tout type d'objet dès lors qu'une mesure de similarité est définie pour ce type d'objets, que cette mesure de similarité est celle qui a été utilisée pour construire la partition, et qu'elle vérifie les 3 conditions suivantes :
- f est une application qui a deux objets de l'ensemble de départ associe un nombre réel,
- ce nombre réel est identique quelque soit l'ordre dans lequel on considère les deux objets,
- le nombre réel associé à deux objets identiques est supérieur au nombre réel associé à deux objets différents.

Les objets sont par exemple constitués par des metadonnées, c'est-à-dire des structure qui regroupent un ensemble de données. De telles metadonnées sont par exemple des descriptions de prises de vue (video shots en anglais), notamment des descriptions de type MPEG-7. Le projet de norme MPEG-7 définit en effet un certain nombre de descripteurs pour prises de vue vidéo (des descripteurs de couleur, de texture, de mouvement de caméra...), et propose des mesures de similarité associées à ces descripteurs. Pour plus de détails on se reportera aux document ISO/IEC JTC1/SC29/WG11 N3521 (juillet 2000) intitulé « Coding of moving pictures and associated audio information » qui renvoie au document « Visual Working draft » version 4.0.

### Brève description des dessins

L'invention sera mieux comprise et d'autres détails apparaîtront dans la description qui va suivre en regard des dessins annexés qui sont donnés à titre d'exemples non limitatifs et dans lesquels :
- la figure 1 est un schéma en blocs décrivant le fonctionnement d'un exemple de procédé de partition d'un ensemble d'objets, qui fournit une partition à plusieurs niveaux susceptible d'être utilisée par un procédé de recherche selon l'invention,
- la figure 2 est un schéma d'un exemple de structure arborescente utilisée pour mettre en oeuvre un procédé de recherche selon l'invention,
- la figure 3 est un schéma en blocs décrivant le fonctionnement d'un exemple de procédé de recherche selon l'invention,
- la figure 4 est un schéma d'un exemple d'équipement selon l'invention,
- la figure 5 est un schéma d'un exemple de système de transmission selon l'invention.

### Description d'un mode de réalisation préférentiel

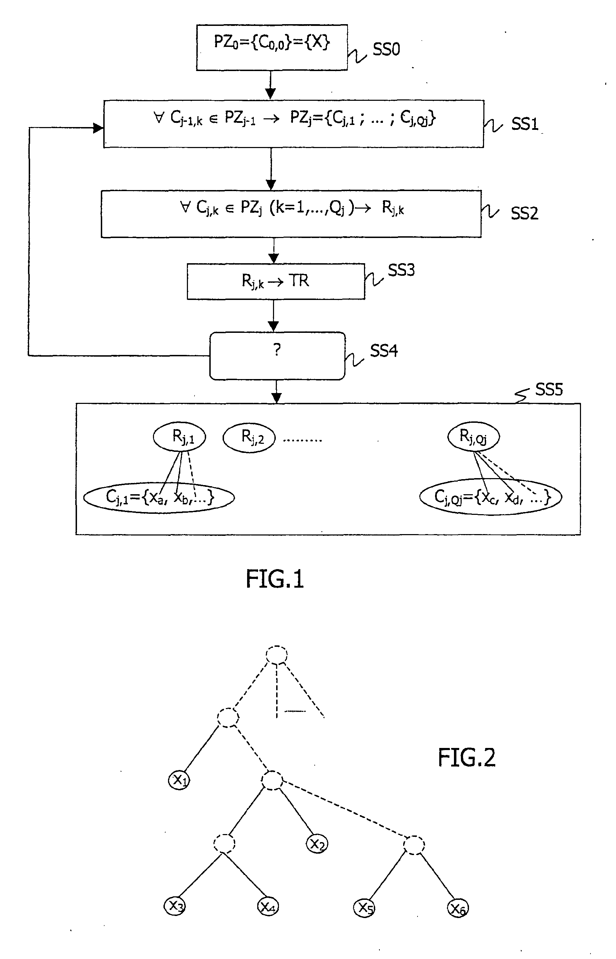

Sur la figure 1 on a représenté un schéma en blocs décrivant le fonctionnement d'un exemple de procédé de partition multi-niveaux destiné à fournir une partition à plusieurs niveaux du type utilisé par un procédé de recherche selon l'invention.

Le procédé de partition de la figure 1 comporte les étapes suivantes :
(SS0) : Une partition initiale PZ₀ est définie. Cette partition comporte une classe C_{0,0} qui contient tous les objets de l'ensemble X.
(SS1) : Une partition PZⱼ est créée pour chaque classe C_{j-1,k} (k=1, ..., Qⱼ₋₁) de la partition PZⱼ₋₁ qui contient plus d'un objet. Cette partition comporte Qⱼ classes C_{j,1}, C_{j,2}, ..., C_{j,Qj}.
(SS2) : Un élément représentatif R_{j,1}, R_{j,2}, ..., R_{j,Qj} est déterminé pour chaque classe C_{j,1}, C_{j,2}, ..., C_{j,Qj} de la partition PZⱼ.
(SS3) : Ces éléments représentatifs sont stockés dans une structure arborescente TR de telle sorte que chaque élément représentatif R_{j,1}, R_{j,2}, ..., R_{j,Qj} soit un fils de l'élément représentatif de la classe C_{j-1,k}.
(SS4) : Les étapes (SS1), (SS2) et (SS3) sont répétées jusqu'à ce que la partition PZⱼ vérifie un critère prédéterminé.
(SS5) : Lorsque le critère prédéterminé est vérifié, les objets des classes C_{j,1}, C_{j,2}, ..., C_{j,Qj} sont stockés de façon à constituer les feuilles des noeuds R_{j,1}, R_{j,2}, ..., R_{j,Qj} respectivement.

A l'étape (SS1), on peut par exemple utiliser une méthode de partition du type « K-Means » tel que décrit dans l'article « An efficient K-means clustering algorithm » de K.Alsabti, S. Ranka et V. Singh, publié à l'occasion du « IPPS/SPDP Worshop on High Performance Data Mining, 1998, Orlando, Florida ». On peut aussi utiliser une méthode de partition hiérarchique par agglomération telle que décrit dans l'introduction du brevet américain précité, ou encore une combinaison des deux méthodes, une méthode part agglomération étant utilisée pour initialiser une méthode de type « K-Means ».

L'élément représentatif d'une classe est par exemple le centroïde de la classe. Pour déterminer le centroïde d'une classe, on calcule d'abord un élément fictif qui présente une même similarité avec tous les éléments de la classe. Le centroïde est constitué par l'élément de la classe qui est le plus proche de cet élément fictif.

Le procédé de partition multi-niveaux se termine (c'est-à-dire que la condition prédéterminée est considérée comme vérifiée) soit lorsque le nombre d'objets par classe est le plus proche possible d'une valeur maximum, soit lorsque les objets contenus dans les classes de la partition PZⱼ sont suffisamment proches du centroïde de la classe.

Sur la figure 2 on a représenté un exemple de structure arborescente TR obtenue avec un tel procédé de partition multi-niveaux et susceptible d'être utilisée pour mettre en oeuvre un procédé de recherche selon l'invention. Les noeuds de l'arbre sont représentés en pointillés. Ils contiennent un élément représentatif d'une classe de l'ensemble d'objets. Les feuilles de l'arbre sont représentées en traits pleins. Elles contiennent les objets x₁, ..., x_{N} de l'ensemble X.

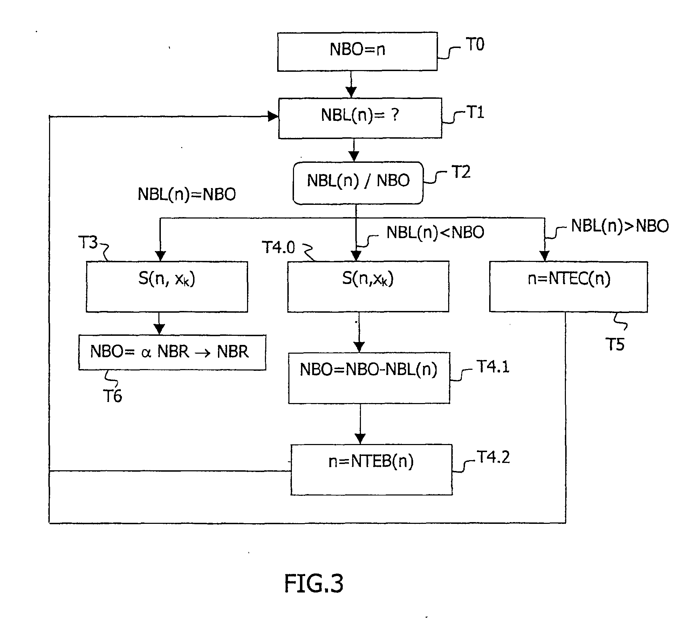

Sur la figure 3, on a représenté un schéma en blocs décrivant le fonctionnement d'un exemple de procédé de recherche selon l'invention pour sélectionner un nombre prédéterminé d'objets N dans une structure arborescente Y. D'après la figure 3, un procédé de recherche selon l'invention comporte les étapes suivantes :
- (T0) : Une variable NBO, qui indique le nombre de feuilles qu'il reste à sélectionner, est initialisée. Sa valeur initiale est égale au nombre prédéterminé d'objets à sélectionner NBO=n.
- (T1) : Le nombre de feuilles NBL(n) qui dépendent du noeud courant n est déterminé. Les feuilles qui dépendent d'un noeud sont les feuilles de ce noeud, ainsi que les feuilles des noeuds qui dépendent de ce noeud.
- (T2) : Le nombre de feuilles qui dépendent du noeud courant NBL(n) est comparé au nombre de feuilles qu'il reste à sélectionner NBO.
- (T3) : S'il sont égaux (NBL(n)=NBO), les feuilles qui dépendent du noeud courant n sont sélectionnées (cette opération de sélection est notée S(n, xₖ) sur la figure 3). Et le procédé se termine.
- (T4.0) : Si le nombre de feuilles NBL(n) est inférieur au nombre de feuilles qu'il reste à sélectionner (NBL(n)<NBO), les feuilles qui dépendent du noeud courant n sont sélectionnées (S(n, xₖ)).
- (T4.1) : La variable NBO qui indique le nombre de feuilles qu'il reste à sélectionner est mise à jour en soustrayant le nombre de feuilles NBL(n) au nombre courant de feuilles qu'il reste à sélectionner : NBO=NBO-NBL(n).
- (T4.2) Le frère du noeud courant qui est le plus proche de l'exemple, noté NTEB(n), devient le nouveau noeud courant : n=NTEB(n), et l'étape (T1) est réitérée.
- (T5) : Si le nombre de feuilles NBL(n) est supérieur au nombre de feuilles qu'il reste à sélectionner (NBL(n)>NBO), le fils du noeud courant qui est le plus proche de l'exemple, noté NTEC(n), devient le nouveau noeud courant : n=NTEC(n), et l'étape (T1) est réitérée.

De façon avantageuse, le nombre d'objets à sélectionner NBO est fixé égal à un multiple du nombre de résultats NBR souhaités par l'utilisateur : NBO=α.NBR. Dans ce cas le procédé de recherche selon l'invention comporte une étape supplémentaire (T6) pour ne retenir parmi les α.NBR objets sélectionnés que les NBR objets les plus proches de l'exemple recherché. Par exemple, cette sélection supplémentaire effectuée à l'étape (T6) consiste en une comparaison systématique des α.NBR objets contenus dans les feuilles sélectionnées avec l'exemple recherché.

La proximité de deux objets est évaluée en utilisant une mesure de similarité f qui dépend du type d'objets en cause, qui est celle qui a été utilisée pour construire la structure arborescente, et qui répond aux trois conditions suivantes :
- f est une application qui a deux objets de l'ensemble de départ associe un nombre réel,
- ce nombre réel est identique quelque soit l'ordre dans lequel on considère les deux objets,
- le nombre réel associé à deux objets identiques est supérieur au nombre réel associé à deux objets différents.

L'invention s'applique notamment à des objets qui sont des instances de descripteurs définis dans le projet de norme MPEG-7, en utilisant les mesures de similarités associées qui sont prposées dans ce projet de norme MPEG-7.

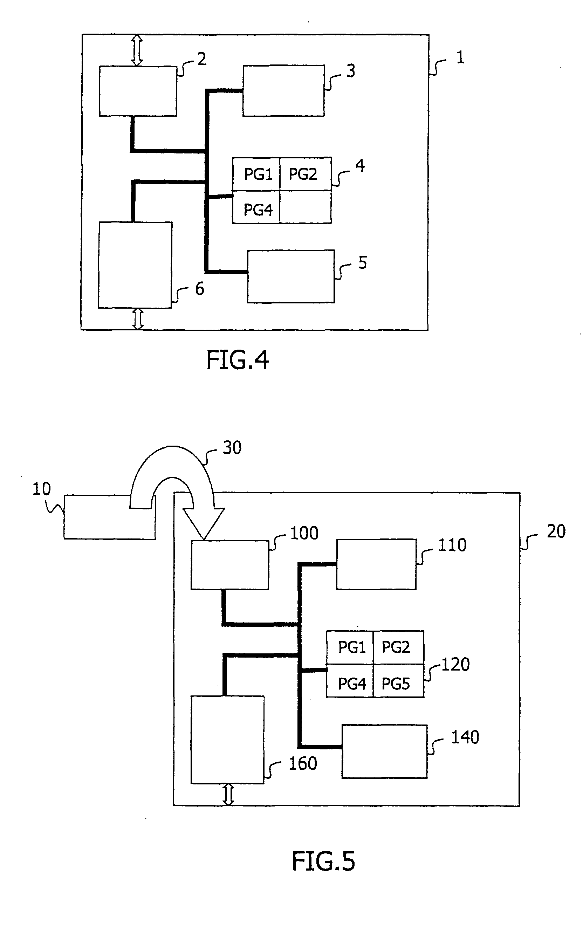

Sur la figure 4 on a représenté un exemple d'un équipement selon l'invention. Cet équipement est une caméra 1 qui comporte des moyens 2 de capture de vidéo (par exemple de type CCD). La caméra 1 comporte également une mémoire 3 pour stocker des données et une mémoire 4 pour stocker des programmes d'ordinateur, un ensemble à microprocesseurs 5 pour exécuter lesdits programmes, et une interface utilisateur 6 pour recevoir des commandes passées par l'utilisateur et pour fournir des données à l'utilisateur. La mémoire 4 contient notamment un ensemble PG1 d'un ou plusieurs programmes pour coder la vidéo capturée. Cet ensemble de programmes PG1 délivre notamment des descriptions de prises de vue de type MPEG-7 qui sont stockées dans la mémoire 3. La mémoire 4 contient également :
- un programme PG2 de partition multi-niveaux d'un ensemble composé de plusieurs desdites descriptions MPEG-7,
- un programme PG4 selon l'invention de recherche dans une structure arborescente contenant lesdites descriptions.

Sur la figure 5 on a représenté un schéma d'un exemple de système de transmission selon l'invention. Un tel système comporte une source de donnée 10, un équipement utilisateur 20, et un média 30 pour transporter des signaux entre la source de données 10 et l'équipement utilisateur 20. La source de données 10 est par exemple une source de données vidéo. Le média de transmission qui transmet ces données vidéo à l'équipement utilisateur est par exemple constitué par un réseau câblé, un réseau de transmission par satellite, une liaison radio... L'équipement utilisateur comporte un circuit de réception 100 servant notamment à recevoir des données transmises par la source 10, une mémoire 110 pour stocker des données, notamment des données reçues, une mémoire 120 qui contient des programmes d'ordinateur, un ensemble à microprocesseurs 140 pour exécuter lesdits programmes, et une interface utilisateur 160 pour recevoir des commandes passées par l'utilisateur et pour fournir des données à l'utilisateur. La mémoire 120 contient notamment un programme PG5 pour élaborer à partir des données vidéo reçues une base de données d'objets qui sont des descriptions MPEG-7 relatives à des prises de vue. Elle contient également un programme PG2 de partition multi-niveaux d'un ensemble comportant des objets de cette base de données, et un programme PG4 selon l'invention de recherche d'objets dans une structure arborescente contenant lesdites descriptions.

## Revendications

1. Procédé de recherche, dans un ensemble d'objets, d'un nombre prédéterminé d'objets les plus proches d'un exemple, en utilisant une partition à plusieurs niveaux qui a une structure arborescente comportant des noeuds et des feuilles, les noeuds contenant des éléments représentatifs de classes d'objets, et les feuilles contenant des objets, ledit procédé consistant à exécuter les étapes suivantes de façon itérative :
- une étape de parcours de ladite structure arborescente à partir d'un noeud, vers des feuilles, en passant par les noeuds dont les éléments représentatifs sont les plus proches de l'exemple, pour sélectionner une ou plusieurs feuilles contenant un ou plusieurs objets,
- une étape de test pour vérifier si le nombre de feuilles sélectionnées est inférieur audit nombre prédéterminé d'objets,
- et, si le nombre de feuilles sélectionnées est inférieur audit nombre prédéterminé d'objets, une nouvelle itération desdites étapes, à partir du noeud frère du dernier noeud parcouru, le plus proche dudit exemple.

2. Procédé de recherche selon la revendication 1, **caractérisé en ce que** le nombre prédéterminé d'objets est un multiple d'un nombre prédéterminé de résultats, et ledit procédé comportant une étape supplémentaire de sélection pour ne retenir, parmi les feuilles sélectionnées, qu'un nombre de feuilles égal audit nombre prédéterminé de résultats, les feuilles retenues étant celles qui contiennent les objets les plus proches dudit l'exemple.

3. Procédé de recherche selon la revendication 1, **caractérisé en ce que** l'étape de parcours de la structure arborescente comporte un test pour vérifier, pour chaque noeud parcouru, si le nombre de feuilles rattachées à ce noeud est inférieur ou égal au nombre d'objets à sélectionner, auquel cas les feuilles rattachées à ce noeud sont sélectionnés directement, sans passer par d'éventuels noeuds intermédiaires.

4. Procédé de recherche selon l'une des revendications 1 ou 2, **caractérisé en ce que** lesdits objets sont des descriptions de prises de vue.

5. Procédé de recherche selon l'une des revendications 1 ou 2, **caractérisé en ce que** lesdits objets sont des descriptions de type MPEG-7.

6. Procédé de recherche selon la revendication 1, **caractérisé en ce que** la proximité des éléments représentatifs, ou des objets, avec l'exemple recherché est déterminée en utilisant une mesure de similarité f qui est celle qui a servi à construire la partition utilisée, et qui vérifie les propriétés suivantes :
- f est une application qui, à deux données de l'ensemble de départ, associe un nombre réel, ce nombre réel est identique quelque soit l'ordre des deux données,
- le nombre réel associé à deux données identiques est supérieur au nombre réel associé à deux données différentes.

7. Programme comportant des instructions de code de programme pour l'exécution des étapes d'un procédé selon l'une des revendications 1 ou 2 lorsque ledit programme est exécuté par un processeur.

8. Equipement comportant des moyens de mise en oeuvre d'un procédé de recherche selon l'une des revendications 1 ou 2.

9. Système de transmission comportant au moins un équipement selon la revendication 8.
